# EUROPEAN PATENT SPECIFICATION

(11) **EP 1 139 210 B1**
(45) Date of publication and mention of the grant of the patent: **17.03.2004**
(21) Application number: 00830228.3
(22) Date of filing: 28.03.2000
(51) Int. Cl.: G06F 3/06, G06F 12/02

(54) **Method of logic partitioning of a nonvolatile memory array**
Verfahren zur logischen Aufteilung einer nichtflüchtigen Speichermatrix
Procédé de partitionnement logique d'une matrice de mémoire non-volatile

(43) Date of publication of application: 04.10.2001
(73) Proprietor: STMicroelectronics S.r.l., 20041 Agrate Brianza (Milano) (IT)
(72) Inventor: Rocchi, Alessandro, 57013 Rosignano Solvay (IT); Bisio, Marco, 41100 Modena (IT); Pasotti, Marco, 27028 San Martino Siccomario (IT); Rolandi, Pier Luigi, 15059 Volpedo (IT)
(74) Representative: Pellegri, Alberto

(56) References cited:
- US-A- 5 627 783
- US-A- 5 987 563

## Description

### FIELD OF THE INVENTION

The present invention concerns a nonvolatile memory and in particular a method of managing a memory organized in a plurality of physical sectors.

### BACKGROUND OF THE INVENTION

Nonvolatile memory are characterized by a data organization in *physical sectors.* The physical sector represents the minimum amount of data that can be erased, even if it is possible to read and write amounts of data smaller than a physical sector (often the term *page* is used to indicate such minimum amounts).

Because of technology improvements, physical sectors become greater and greater, affecting the managing of blocks of data of relatively small dimensions on which carrying out reading, writing and erasing operations independently from the rest of stored data.

Because of the great importance assumed by FLASH memories, in the following description we shall refer to this type of memories though the object of the invention can be usefully implemented *mutatis mutandis* in any kind of nonvolatile memory.

The problem of managing large physical sectors is particularly important in PC environment wherein almost all the applications for managing mass storage devices memories (floppy, hard disk, memory card), use data units of 512 bytes instead of tens or hundreds of Kbytes typical of a sector of a FLASH memory. Therefore, an internal organization of single physical sectors is needed in order to singularly manage each data portion.

A further problem related to the managing of physical sectors of large dimensions is tied to the need of eliminating only a few data of a sector while retaining the remaining data This is a problem because in FLASH memories it is possible only to erase a whole physical sector, and not only a portion of it.

The easiest solution would consist in having a memory sector (BUFFER) unaccessible by the user on which to copy data to save before erasing the sector and restore them when the erasing has taken place. To avoid adding a memory device, said BUFFER can be a dedicated sector of the FLASH unaccessible by the user.

Nevertheless, the sector dedicated to such a function will be subject to repeated programming and erasing cycles with a consequent accelerated degradation compared to all the other sectors.

The document US-A-5 627 783, discloses a flash memory comprising multiple erase blocks, each erase block comprising a physical-logical block number and multiple data areas for storing payload information. Each data area comprising a storage area, a status indicator and a chain pointer. Data areas are addressed by splitting a logical request address into physical-logical block address and an offset. The requested block is found through an associative search. If a data area has been updated with new data, the valid data area is found by following the chain pointer. Valid data of full blocks are copied to an empty block and a new block is signed the physical-logical address of the old block which is then erased.

### OBJECT AND SUMMARY OF THE INVENTION

It has been found and is the object of the invention a method of managing a nonvolatile memory device and a relative memory organization in physical sectors such to permit reading and writing operations on portions of the memory of reduced dimensions by splitting a physical sector in a plurality of independently addressable logic sectors.

The method of the invention makes the user "see" a physical sector as if constituted by a number of blocks of data whose pre-established dimension does not depend from the dimension of the physical sector of the memory, allowing reading, writing and erasing operations even on a single block.

The method of the invention is particularly easy and can be implemented without great difficulties by the on board controller/finite state machine of the memory device.

In a memory device where a sector may be erased only as a whole, a further object of the invention is to provide a method of erasing only a portion of data stored in a physical sector, by using a dedicated unaccessible buffer sector of the memory, while overcoming the known problems of an excessively fast degradation of such a buffer sector.

The invention is clearly defined in the attached independent claims.

### BRIEF DESCRIPTION OF THE DRAWINGS

The different aspects and advantages of the invention will become clear through the following detailed description of the invention and by referring to the attached drawings, wherein:
**Figure 1** depicts the structure of a logic sector of the invention;
**Figure 2** is an example of management of the logic sectors of a physical sector;
**Figure 3** shows the organization of the physical sectors of a memory of the invention;
**Figures 4a, 4b** describe in a detailed manner the steps of erasing a physical sector of a memory of the invention;
**Figure 5** is a flow chart of the preliminary erasing procedure of the invention;
**Figure 6** is a flow chart of the procedure of formatting a memory of the invention.

### DESCRIPTION OF AN EMBODIMENT OF THE INVENTION

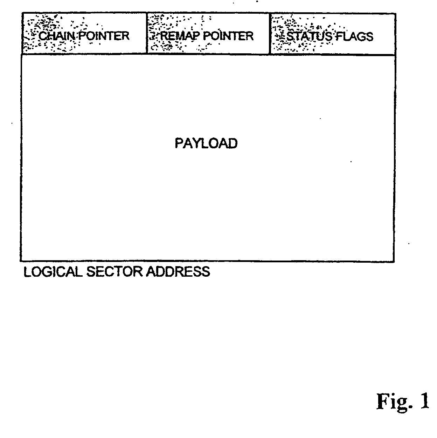

The gist of the invention consists in dividing each physical sector of the memory in blocks called logic sectors, such as the one depicted in Fig. 1. Each logic sector is a structure of data comprising a chain pointer CHAIN_PTR, a remap pointer REMAP_PTR and a state indicator STATUS, besides a payload space reserved for data storage.

The state of a logic sector indicates the condition of the respective PAYLOAD: STATUS=OD (owner of data) indicates that data relative to a certain sector are in its payload, STATUS=NOD (not owner of data) indicates that the payload of a sector is used to store updated data of another logic sector, STATUS=DEL (deleted) indicates that the logic sector being examined has been logically erased and that data in its payload are no longer valid, STATUS=FREE indicates a logic sector that has not yet been used.

Because of this memory organization, the memory does not appear to the user as composed of physical sectors of large dimensions, but as composed of logic sectors of relatively small dimensions that are individually addressable, and whose content can be updated independently from the other logic sectors.

As matter of fact, when the user stores new data in a certain logic sector that already contains other data, the new data are written in a free logic sector, the respective state is set to the value NOD and the chain pointer CHAIN_PTR of the sector in which they should have been written is set equal to the address of the sector in which data have been effectively written. If the user stores data in a logic sector that contains data belonging to another sector, the new data are written in a free sector, the relative state is set to NOD and the remap pointer REMAP_PTR of the sector in which such data should have been written in is set equal to the address of the sector in which the data have been effectively written.

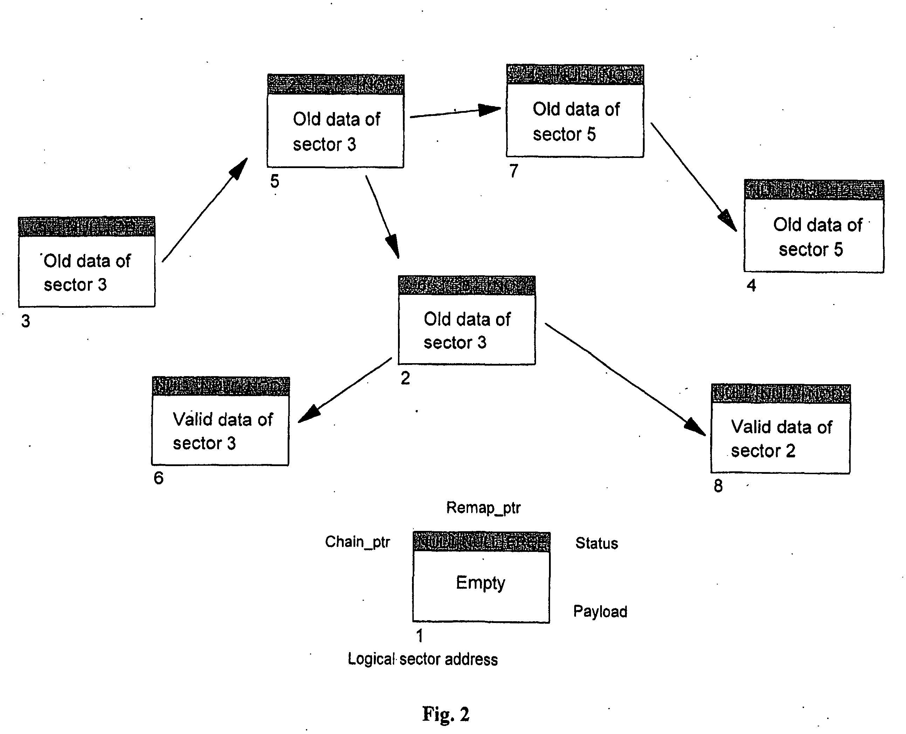

In order to understand better the method of the invention, let us consider an example of management of a physical sector composed by eight logic sectors, as illustrated in Fig. 2. Let us suppose that a user must carry out the following sequence of operations:
I. storing data in the logic sector 3;
II. updating data stored in the logic sector 3;
III. second updating of data stored in the logic sector 3;
IV. third updating of data in the logic sector 3;
V. storing data in the logic sector 2;
VI. storing data in the logic sector 5;
VII. updating data in the logic sector 5;
VIII. erasing data stored in the logic sector 5.

At the end of the following operations, the configuration is that depicted in Fig. 2, obtained by the respective operations:
I. writing the data to be stored in the PAYLOAD of the sector 3 and setting its STATUS to the value OD;
II. writing the data to be stored in a free sector, for example sector 5, because sector 3 is already engaged by its own data, setting the STATUS of sector 5 to the value NOD and setting the chain pointer CHAIN_PTR of sector 3 equal to the address of sector 5;
III. writing the data to be stored in a free sector, for example sector 2, because sector 3 is already engaged by its own data, setting the STATUS of sector 2 to the value NOD and making the CHAIN_PTR of sector 3 indirectly address sector 2. This last operation is carried out by setting the chain pointer of sector 5 equal to the address of sector 2, because the chain pointer of sector 3 is already engaged and addresses sector 5;
IV. writing the data to be stored in a free sector, for example sector 6, because sector 3 is already engaged by its own data, setting the STATUS of sector 6 to the value NOD and making the CHAIN_PTR of sector 3 indirectly address sector 6. This last operation is carried out by setting the chain pointer of sector 2 equal to the address of sector 6, because the chain pointer of sector 3 directly addresses sector 5, whose CHAIN_PTR directly addresses sector 2;
V. writing the data to be stored in a free sector, for example sector 8, because sector 2 is already engaged by data that are not its own data, setting the STATUS of sector 8 to the value NOD and setting the remap pointer REMAP_PTR of sector 2 equal to the address of sector 8;
VI. writing the data to be stored in a free sector, for example sector 7, because sector 5 is already engaged, setting the STATUS of sector 7 to the value NOD. The status of sector 5 is equal to NOD so its remap pointer REMAP_PTR must be considered and is set equal to the address of sector 7;
VII. writing the data to be stored in a free sector, for example sector 4, because sector 5 is already engaged, setting the STATUS of sector 4 to the value NOD. The STATUS of sector 5 is equal to NOD so its remap pointer REMAP_PTR must be considered, which addresses to sector 7, so the CHAIN_PTR of sector 7 is set equal to the address of sector 4;
VIII. the remap pointer REMAP_PTR of sector 5 must be considered, because the STATUS of sector 5 is equal to NOD. The erasing of data stored in sector 5 is carried out setting the status of sector 4 equal to DEL because the REMAP_PTR of sector 5 addresses to sector 7, whose CHAIN_PTR addresses to sector 4.

When the above operations are completed, the situation is as follows:
- the logic sector 3 has been rewritten three times, successively storing new data in sectors 5, 2 and 6. Valid data are stored in sector 6 and can be reached following the chain of pointers CHAIN_PTR starting from sector 3;
- the logic sector 2 has been remapped to sector 8 because it was used to store data of sector 3;
- the logic sector 5 has been rewritten twice using the sectors 7 and 4 and successively it has been erased: the erasing operation of a logic sector consists in making invalid the end of the chain, starting from the sector to be erased, by marking it with the status DEL;
- the logic sector 1 has not been used and remains free.

By resuming, when the payload of a logic sector must be modified, a free logic sector of the same physical sector is linked to the first one and used to store the new payload without actually invoking a physical erasing of the sector. By means of the CHAIN_PTR a relation is established between the original sector and the one in which the updated data have been written.

On the contrary when data must be written in a PAYLOAD of a logic sector already used in a previously organized chain (i.e. used to store the content of the PAYLOAD of another logic sector), a remapping of the sector is done. The pointer REMAP_PRT is used in this case to indicate where the chain of data, related to a logic sector already used, starts.

The above described procedure can be repeated until there are no more free logic sectors in the considered physical sector, thus constructing a data chain wherein only the last linked sector contains valid data. When access to a logic sector is requested, it is sufficient to follow the chain of the CHAIN_PTR, originating from the sector to be examined, till its end.

Only when there are no more free logic sectors in a certain physical sector, or upon an explicit command, a physical erasing of the sector may be commanded. In practice this consists in saving the valid data related to logic sectors that do not have to be erased, in erasing the whole physical sector and in rewriting the saved valid data in the logic sectors of origin, thus simplifying the chain.

The invention offers the following advantages:
- the read/write operations of the pointer areas are equally distributed in time and in physical memory space because each physical sector has its own local table of pointers to logic sectors; this minimize burdening of the area containing the pointers to data structures;
- the invention is outstandingly efficient when managing of data involves relatively small logic sectors, i.e. when it is necessary to manage the memory with a finer granularity of the data structures.

The invention can be implemented in a way as to prevent overutilization of dedicated physical sector by managing the memory as follows.

As previously stated, the commonly used technique for erasing a portion of a physical sector consists in using a BUFFER sector unaccessible by the user.

Before erasing a physical sector, the data to be saved are temporary saved in this prearranged buffer space. Once the sector is erased, the saved data are copied back into the erased sector. A drawback of this procedure consists in exposing the same BUFFER sector to relatively frequent writing and reading operations which leads to a premature degradation of this sector.

The present invention provides a method for overcoming this problem, by allowing the user of a memory composed of k physical sectors, to manage partial erasings of no more than *k-1* physical sectors, without using at least the same sector, unaccessible by the user, as BUFFER.

In the followings, the case in which there is only one BUFFER sector is considered, because in this way the memory is used at its maximum capacity; nevertheless the method of the invention can be implemented even arranging for more than one BUFFER sector.

The way in which the *k-1* sectors and the BUFFER sector are defined is such to:
- be transparent to the user, that sees a memory with *k-1* independently erasable sectors,
- not degrade the sector used as buffer by distributing in time the erasing operations substantially on all physical sectors,
- be easily implemented by the onboard controller of the memory.

The algorithm is particularly tolerant of interruptions of write/erase processes (for . example because of a supply failure), which could leave the content of the memory in a inconsistent state: a boot routine that the on board controller carries out at the start up sets the content in a consistent condition.

Substantially, each physical sector is constituted by a payload and by a header containing information on data stored in payload.

The header is composed of the following field:
1) LOGICAL_ADDRESS: indicates the logical address to which the physical sector is associated;
2) STATUS: indicates the status of the physical sector that can assume the following values:
   - EMPTY: indicates that the physical sector has been erased;
   - BUSY: indicates that the payload contains data that have not been validated yet;
   - GOOD: indicates that the payload contains validated data;
   - OLD: indicates that the physical sector must be erased.

Given that the effectiveness of the algorithm of the invention rests on the reliability of data present in the header, the flags indicating the status of a sector can be stored on several bits: the presence of a determined bit configuration will indicate if the corresponding flag is set or not. In any case the memory amount necessary to store the header remains extremely limited if compared to the size of the payload (few bytes Vs several tens of Kbytes).

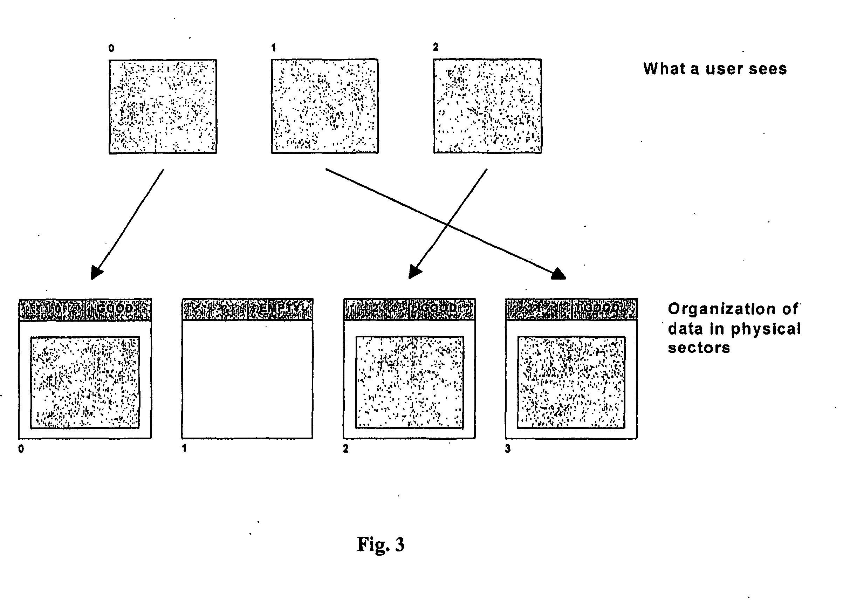

A possible organization of a memory constituted by four physical sectors is schematically depicted in Fig. 3.

When the user requires a read or write access to a certain logical address, the internal controller of the memory redirect the access to the payload of the corresponding physical sector. This can be done in two ways:
1) the controller scans all headers until it finds a physical sector whose LOGICAL_ADDRESS is equal to the desired logical address;
2) at the start-up of the memory device, the controller builds a look up table in which it stores the relations physical sector/logical address.

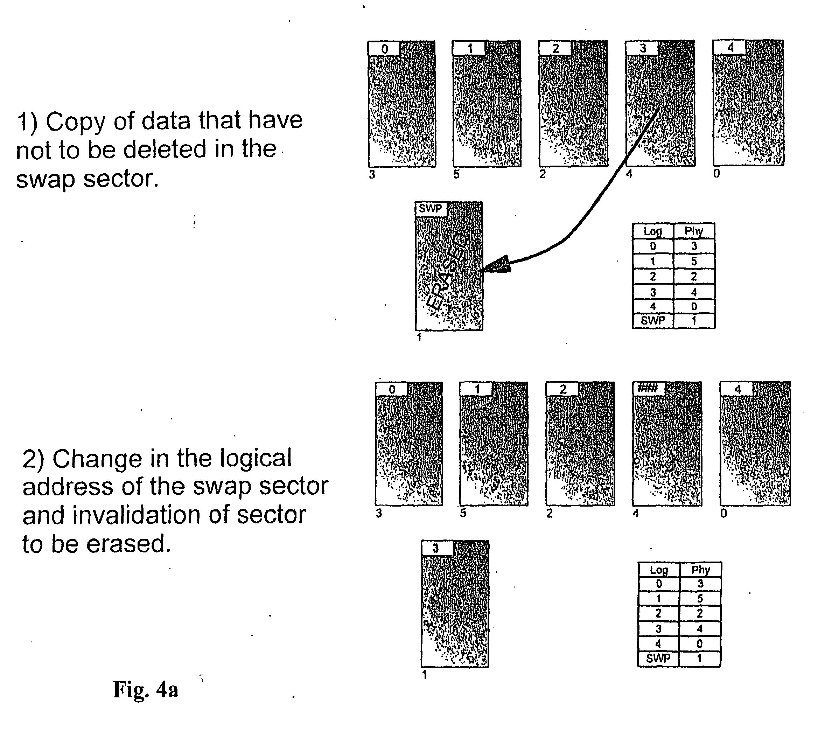

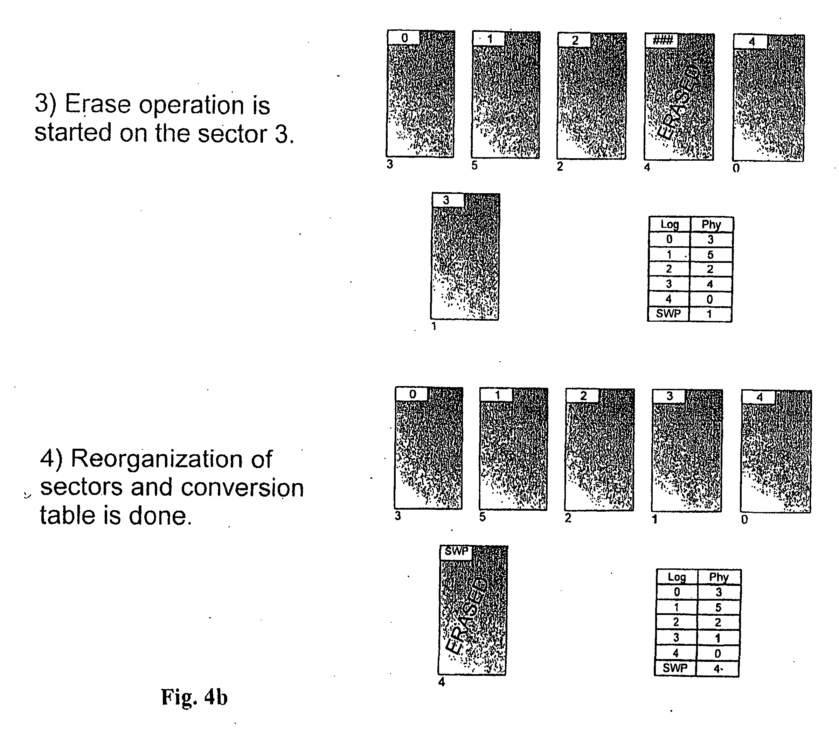

When the user requires a partial erasing of data stored in a physical sector, the algorithm described in Figs. 4a, 4b is carried out. A free sector is identified and the data to be saved are copied in it, attributing to it the same logical address (3) of the physical sector to be erased *4*. Successively, a neutral address (###) is assigned to the physical sector to be erased *4* and the erasing operation is carried out. Lastly, the look up table is updated. The final result is to have a memory in which only the desired data are contained at the respective logical addresses, but they are stored in different physical sectors.

In order to erase in this way a physical sector, it is necessary the presence of at least a free physical sector, in which to copy the data to be saved that are currently stored in the sector to be erased. In other words, the method of the invention can be implemented by carrying out the following steps:
1) locating the physical sector PHY_ADDR to be partially erased by its respective logical address;
2) locating the free sector BUF_ADDR, i.e. the one characterized by an EMPTY status in its header;
3) setting STATUS=BUSY in the located free sector at the address BUF_ADDR to indicate that on such a sector a data transfer is going to start and so it should no longer be considered free;
4) copying the logical address of the sector to be erased partially in the LOGICAL_ADDRESS of the sector addressed by BUF_ADDR;
5) copying the data that must be preserved by the partial erasing from the payload of the sector addressed by PHY_ADDR in the payload of the sector addressed by BUF_ADDR;
6) setting STATUS=GOOD in the sector addressed by BUF_ADDR indicating that its payload contains data to be saved belonging to the physical sector that must be partially erased;
7) setting STATUS=OLD in the sector addressed by PHY_ADDR indicating that its payload no longer contains valid data;
8) erasing the whole sector addressed by PHY_ADDR;
9) setting STATUS=EMPTY in the sector addressed by PHY_ADDR indicating that its payload is empty.

The result of this algorithm is to locate the sector that had to be partially erased in the sector that initially was free, saving the data were not to be erased, and to free the erased physical sector, making it available as a buffer space for future erasing operations.

Even if the method of this invention requires a free physical sector of the memory as the known methods of memory management, the mechanism of dynamic allocation of the sectors that are visible by the user guarantees a distribution of the erasing operations on all the physical sectors of the memory.

The steps of the algorithm are such to make it tolerant to interruptions (for example because of a supply failure). The boot routine described hereinbelow, carried out by the internal controller of the memory at the start-up of the device, is able to reset the headers of the physical sectors in a coherent condition by analyzing the status of the various flags.

To be sure that all logical addresses are associated to respective physical sectors and that there is at least a physical sector available for the partial erasing algorithm, the method of the invention contemplates an initializing procedure, BOOT_ROUTINE. It must be run whenever a supply failure has set the header of a physical sector in an invalid condition and when the memory device is used for the first time, i.e. when there is not organization of data inside the memory.

The BOOT_ROUTINE includes a first routine, BOOT_ERASE, followed by a second routine, BOOT_FORMAT.

### BOOT ERASE

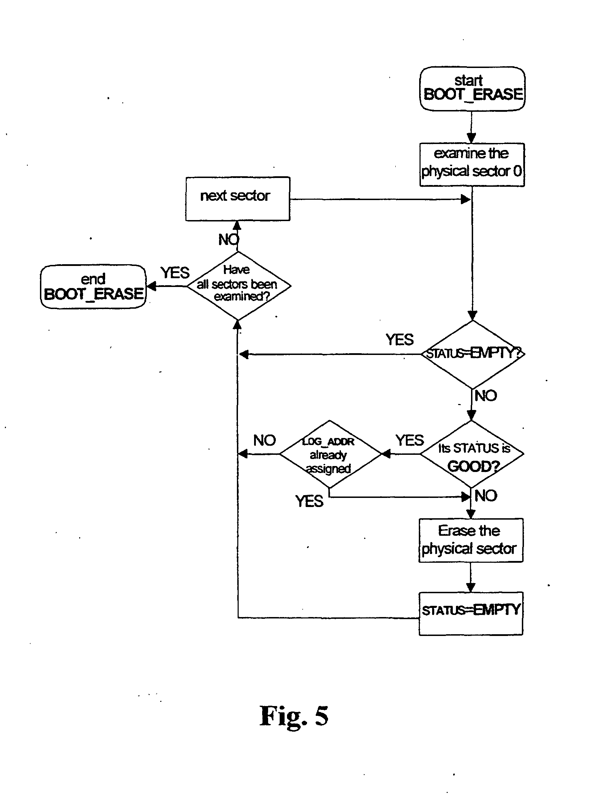

This routine erases all physical sectors whose STATUS is invalid, i.e. different from EMPTY or GOOD, as illustrated in Fig. 5. In particular are erased all physical sectors that:
- have a STATUS=BUSY, indicating that on the sector being examined a partial erasing (that was interrupted between steps 3) or 4) of the algorithm) was in progress;
- have a STATUS=OLD, indicating that the sector had to be erased but the erasing algorithm was interrupted after step 7);
- have a STATUS=GOOD but have a LOGICAL_ADDRESS already present in the HEADER of an already analyzed physical sector, indicating that in the memory a same logical address LOGICAL_ADDRESS is present on two distinct physical sectors: this happens when the partial erasing algorithm is stopped at step 6);
- have an invalid status, because a physical erasing operation (step 8 of the algorithm) was in progress on the sector when it was interrupted or because the memory was new. At the end of each erasing operation, the STATUS of the sector is set equal to EMPTY.

It is important to note that whichever is the reason that makes the controller invoke a physical erasing of a sector, from the point of view of the user there is no data loss. Moreover the BOOT_ERASE routine is tolerant to interruptions, and does not induce unrecoverable states in the data structure of the memory or jeopardize the user's data.

### BOOT FORMAT

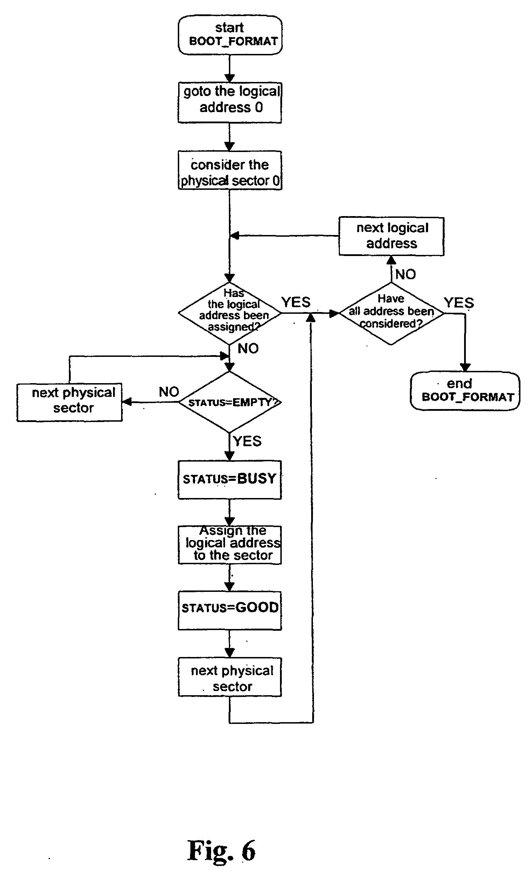

The BOOT_FORMAT routine, carried out at the end of the BOOT_ERASE routine, controls that to each physical sector is associated a logical address. The object of the BOOT_FORMAT routine, illustrated in Fig. 6, consists in making the memory ready for normal operation, by controlling that all logical addresses have been assigned to as many physical sectors and that there is at least a free physical sector for the partial erasing algorithm.

As may be noticed, the BOOT_FORMAT routine tolerates interruptions without inducing unrecoverable states in the data structures of the memory or jeopardize the user's data.

## Claims

1. An architecture of a FLASH memory organized in a plurality of physical sectors wherein read, write and erase operations of data occupying a fractional memory space of any one of said physical sectors are carried out, whereby each physical sector is split in a plurality of singularly addressable logic sectors, each logic sector (j) corresponding to a memory space of a pre-established dimension including a storage space (PAYLOADⱼ) and a header space containing:
a chain pointer (CHAIN_PTRⱼ) assuming a neutral value (NULL) or a value pointing directly or indirectly to a second logic sector associated with to a respective chain pointer (CHAIN_PTR₂) equal to said neutral value (NULL);
a status indicator (STATUSⱼ) assuming a first value (FREE) if the logic sector is empty, a second value (OD) if the data stored in the storage space belong to said logic sector, a third value (NOD) if said data do not belong to said logic sector, or a fourth value (DEL) if said data have been erased;
a remap pointer (REMAP_PTRⱼ) assuming said neutral value (NULL) or a value
pointing directly or indirectly to a respective chain pointer (CHAIN_PTR₃) of a third logic sector.

2. A method of managing a FLASH memory organized in a plurality of physical sectors organized according to claim 1 and wherein read, write and erase operations of data occupying a fractional memory space of any one of said physical sectors are carried out, comprising
initializing the memory by setting all chain pointers (CHAIN_PTR) and all remap pointers of all the logic sectors into which the physical sectors are split equal to said neutral value (NULL) and setting all status indicators (STATUS) of said logic sectors at said first value (FREE);
virtually erasing a certain logic sector (j) whose respective chain pointer (CHAIN_PTRⱼ) has said neutral value (NULL) by setting the respective status indicator (STATUSⱼ) of said logic sector (j) at said fourth value (DEL);
reading data relative to any one of said logic sectors according to the following procedure:
if the respective status indicator (STATUSⱼ) of said logic sector has one of said values first (FREE) or fourth (DEL), reading a null value;
if said status indicator (STATUSⱼ) differs from said value first (FREE) or fourth (DEL) then
if the respective remap pointer (REMAP_PTRⱼ) of said logic sector has a neutral value (NULL), reading the data stored in said logic sector if the respective chain pointer (CHAIN_PTRⱼ) of said logic sector has a neutral value (NULL) or reading the data stored in another logic sector directly or indirectly addressed by said chain pointer (CHAIN_PTRⱼ);
if said remap pointer (REMAP_PTRⱼ) points to a chain pointer (CHAIN_PTR_{n≠j}) of a certain logic sector (n≠j), reading data stored in said certain logic sector (n≠j) if the respective chain pointer (CHAIN_PTR_{n≠j}) has a neutral value (NULL) or reading data stored in a different logic sector directly or indirectly addressed by said chain pointer (CHAIN_PTR_{n≠j});
writing data in any logic sector according to the following procedure:
a) if the respective status indicator (STATUSⱼ) of said logic sector has said first value (FREE), writing said set of data in the respective storage space of said logic sector and assigning to said status indicator (STATUSⱼ) one of said values second (OD) or third (NOD);
b) if said status indicator (STATUSⱼ) has said second value (OD), repeating step a) on another empty logic sector (n≠j) setting the respective status indicator (STATUS_{n≠j}) of said other logic sector (n≠j) equal to said third value (NOD) and setting the chain pointer (CHAIN_PTRᵢ) of the logic sector (i) directly or indirectly addressed by said chain pointer (CHAIN_PTRⱼ) of said logic sector (j) equal to the address of said other logic sector (n≠j);
c) if said status indicator (STATUSⱼ) has said third value (NOD) or said fourth value (DEL) and if the respective remap pointer (REMAP_PTRⱼ) of said logic sector (j) has a neutral (NULL) value, repeating step a) on another empty logic sector (n≠j) setting the respective status indicator (STATUS_{n≠j}) equal to said third value (NOD) and setting said remap pointer (REMAP_PTRⱼ) equal to the address of said other logic sector (n≠j);
d) if said remap pointer (REMAP_PTRⱼ) is not neutral (NULL), repeating step a) on another empty logic sector (n≠j) setting the respective status indicator (STATUS_{n≠j}) equal to said third value (NOD), setting a respective chain pointer (CHAIN_PTRⱼ) of a further logic sector directly or indirectly addressed by said remap pointer (REMAP_PTRⱼ) equal to the address of said other logic sector (n≠j);
rewriting data stored in any physical sector according to the following procedure:
saving valid data contained in logic sectors whose respective chain pointers (CHAIN_PTR) have said neutral value (NULL) and the respective status indicator (STATUS) differs from said fourth value (DEL);
for any valid data, saving the address of the respective logic sector;
physically erasing said physical sector of the memory;
writing said saved data in the respective logic sectors and setting the respective status indicators (STATUS) at said second value (OD).

## Patentansprüche

1. FLASH-Speicher-Architektur, wobei der FLASH-Speicher in mehreren physikalischen Sektoren organisiert ist, in denen Lese-, Schreib- und Löschoperationen von Daten, die einen Bruchteil des Speicherraums irgendeines der physikalischen Sektoren belegen, ausgeführt werden, wobei jeder physikalische Sektor in mehrere einzeln adressierbare logische Sektoren unterteilt ist, wobei jeder logische Sektor (j) einem Speicherraum einer im Voraus erstellten Dimension entspricht, die einen Speicherraum (PAYLOADⱼ) und einen Kopfsatzraum enthält, mit:
einem Kettenzeiger (CHAIN_PTRⱼ), der einen neutralen Wert (NULL) oder einen Wert annimmt, der direkt oder indirekt auf einen zweiten logischen Sektor zeigt, dem ein entsprechender Kettenzeiger (CHAIN_PTR₂) zugeordnet ist, der gleich dem neutralen Wert (NULL) ist;
einem Statusanzeiger (STATUSⱼ), der einen ersten Wert (FREE) annimmt, falls der logische Sektor leer ist, einen zweiten Wert (OD) annimmt, falls die in dem Speicherraum gespeicherten Daten zu dem logischen Sektor gehören, einen dritten Wert (NOD) annimmt, falls die Daten nicht zu dem logischen Sektor gehören, oder einen vierten Wert (DEL) annimmt, falls die Daten gelöscht worden sind;
einem Rückabbildungszeiger (REMAP_PTRⱼ), der den neutralen Wert (NULL) oder einen Wert annimmt, der direkt oder indirekt auf einen entsprechenden Kettenzeiger (CHAIN_PTR₃) eines dritten logischen Sektors zeigt.

2. Verfahren für das Management eines FLASH-Speichers, der in mehreren physikalischen Sektoren organisiert ist, die gemäß Anspruch 1 organisiert sind und in denen Lese-, Schreib- und Löschoperationen von Daten, die einen Bruchteil des Speicherraums irgendeines der physikalischen Sektoren einnehmen, ausgeführt werden, umfassend:
Initialisieren des Speichers durch Setzen sämtlicher Kettenzeiger (CHAIN_PTR) und sämtlicher Rückabbildungszeiger sämtlicher logischer Sektoren, in die die physikalischen Sektoren aufgeteilt sind, gleich dem neutralen Wert (NULL) und durch Setzen sämtlicher Statusanzeiger (STATUS) der logischen Sektoren auf den ersten Wert (FREE);
virtuelles Löschen eines bestimmten logischen Sektors (j), dessen entsprechender Kettenzeiger (CHAIN_PTRⱼ) den neutralen Wert (NULL) besitzt, indem der entsprechende Statusanzeiger (STATUSⱼ) des logischen Sektors (j) auf den vierten Wert (DEL) gesetzt wird;
Lesen von Daten, die auf irgendeinen der logischen Sektoren bezogen sind, gemäß der folgenden Prozedur:
falls der entsprechende Statusanzeiger (STATUSⱼ) des logischen Sektors entweder den ersten Wert (FREE) oder den vierten Wert (DEL) besitzt, Lesen eines Null-Wertes;
falls sich der Statusanzeiger (STATUSⱼ) von dem ersten Wert (FREE) oder von dem vierten Wert (DEL) unterscheidet, dann
falls der jeweilige Rückabbildungszeiger (REMAP_PTRⱼ) des logischen Sektors einen neutralen Wert (NULL) besitzt, Lesen der in dem logischen Sektor gespeicherten Daten, falls der entsprechende Kettenzeiger (CHAIN_PTRⱼ) des logischen Zeigers einen neutralen Wert (NULL) hat, oder Lesen der in einem weiteren logischen Sektor gespeicherten Daten, der direkt oder indirekt durch den Kettenzeiger (CHAIN_PTRⱼ) adressiert wird;
falls der Rückabbildungszeiger (REMAP_PTRⱼ) auf einen Kettenzeiger (CHAIN_PTR_{n≠j}) eines bestimmten logischen Sektors (n≠j) zeigt, Lesen von Daten, die in dem bestimmten logischen Sektor (n ≠ j) gespeichert sind, falls der entsprechende Kettenzeiger (CHAIN_PTR_{n≠j}) einen neutralen Wert (NULL) besitzt, oder Lesen von Daten, die in einem anderen logischen Sektor gespeichert sind, der direkt oder indirekt durch den Kettenzeiger (CHAIN_PTR_{n≠j}) adressiert wird;
Schreiben von Daten in irgendeinen logischen Sektor gemäß der folgenden Prozedur:
a) falls der entsprechende Statusanzeiger (STATUSⱼ) des logischen Sektors den ersten Wert (FREE) besitzt, Schreiben der Menge von Daten in den entsprechenden Speicherraum des logischen Sektors und Zuweisen des zweiten Wertes (OD) oder des dritten Wertes (NOD) an den Statusanzeiger (STATUSⱼ);
b) falls der Statusanzeiger (STATUSⱼ) den zweiten Wert (OD) besitzt, Wiederholen des Schrittes a) an einem weiteren leeren logischen Sektor (n≠j), Setzen des entsprechenden Statusanzeigers (STATUS_{n≠j}) des anderen logischen Sektors (n≠j) gleich dem dritten Wert (NOD) und Setzen des Kettenzeigers (CHAIN_PTRᵢ) des logischen Sektors (i), der direkt oder indirekt durch den Kettenzeiger (CHAIN_PTRⱼ) des logischen Sektors (j) adressiert wird, gleich der Adresse des anderen logischen Sektors (n ≠j);
c) falls der Statusanzeiger (STATUSⱼ) den dritten Wert (NOD) oder den vierten Wert (DEL) besitzt und falls der entsprechende Rückabbildungszeiger (REMAP_PTRⱼ) des logischen Sektors (j) einen neutralen Wert (NULL) besitzt, Wiederholen des Schrittes a) an einem weiteren logischen Sektor (n≠j), Setzen des entsprechenden Statusanzeigers (STATUS_{n≠j}) gleich dem dritten Wert (NOD) und Setzen des Rückabbildungszeigers (RE-MAP_PTRⱼ) gleich der Adresse des anderen logischen Sektors (n≠j);
d) falls der Rückabbildungszeiger (REMAP_PTRⱼ) nicht den neutralen Wert (NULL) besitzt, Wiederholen des Schrittes a) an einem weiteren logischen Sektor (n≠j), Setzen des entsprechenden Statusanzeigers (STATUS_{n≠j}) gleich dem dritten Wert (NOD) und Setzen eines entsprechenden Kettenzeigers (CHAIN_PTRⱼ) eines weiteren logischen Sektors, der direkt oder indirekt durch den Rückabbildungszeiger (REMAP_PTRⱼ) adressiert wird, gleich der Adresse des anderen logischen Sektors (n≠j);
Neuschreiben von Daten, die in irgendeinem physikalischen Sektor gespeichert sind, gemäß der folgenden Prozedur:
Sichern gültiger Daten, die in logischen Sektoren enthalten sind, deren jeweiliger Kettenzeiger (CHAIN_PTR) den neutralen Wert (NULL) besitzen und deren jeweiliger Statusanzeiger (STATUS) von dem vierten Wert (DEL) verschieden ist;
für irgendwelche gültigen Daten Sichern der Adresse des logischen Sektors;
physikalisches Löschen des physikalischen Sektors des Speichers;
Schreiben der gesicherten Daten in die entsprechenden logischen Sektoren und Setzen der entsprechenden Statusanzeiger (STATUS) auf den zweiten Wert (OD).

## Revendications

1. Architecture de mémoire FLASH organisée en une pluralité de secteurs physiques dans laquelle des opérations de lecture, d'écriture et d'effacement de données occupant un espace mémoire fractionnel de l'un quelconque desdits secteurs physiques sont effectuées, d'où il résulte que chaque secteur physique est partagé en plusieurs secteurs logiques adressables de façon individuelle, chaque secteur logique (j) correspondant à un espace mémoire de dimension préétablie incluant un espace mémoire (PAYLOADⱼ) et un espace d'entête, contenant :
un pointeur de chaîne (CHAIN_PTRⱼ) prenant une valeur neutre (NULL) ou une valeur pointant directement ou indirectement vers un second secteur logique associé à un pointeur de chaîne (CHAIN_PTR₂) respectif égal à la valeur neutre (NULL) ;
un indicateur d'état (STATUSⱼ) prenant une première valeur (FREE) si le secteur logique est vide, une deuxième valeur (OD) si les données mémorisées dans l'espace de mémorisation appartiennent au secteur logique, une troisième valeur (NOD) si les données n'appartiennent pas au secteur logique, ou une quatrième valeur (DEL) si les données ont été effacées ;
un pointeur de remappage (REMAP_PTRⱼ) prenant la valeur neutre (NULL) ou une valeur pointant directement ou indirectement vers un pointeur de chaîne (CHAIN_PTR₃) respectif d'un troisième secteur logique.

2. Procédé de gestion d'une mémoire FLASH organisée en une pluralité de secteurs physiques organisés selon la revendication 1 et dans laquelle des opérations de lecture, d'écriture et d'effacement de données occupant un espace de mémoire fractionnel de l'un quelconque des secteurs physiques sont effectués, comprenant les étapes suivantes :
initialiser la mémoire en prépositionnant tous les pointeurs de chaîne (CHAIN_PTR) et tous les pointeurs de remappage de tous les secteurs logiques dans lesquels les secteurs physiques sont partagés à la valeur neutre (NULL) et en mettant tous les indicateurs d'état (STATUS) des secteurs logiques à la première valeur (FREE) ;
effacer virtuellement un certain secteur logique (j) dont le pointeur de chaîne (CHAIN_PTRⱼ) respectif a la valeur neutre (NULL) en plaçant l'indicateur d'état (STATUSⱼ) respectif du secteur logique (j) à la quatrième valeur (DEL) ;
lire les données relatives à l'un quelconque des secteurs logiques selon la procédure suivante :
si l'indicateur d'état (STATUSⱼ) respectif du secteur logique a l'une des première (FREE) ou quatrième (DEL) valeurs, lire une valeur nulle ;
si l'indicateur d'état (STATUSⱼ) diffère de la première valeur (FREE) ou de la quatrième valeur (DEL), alors :
si le pointeur de remappage (REMAP_PTRⱼ) du secteur logique a une valeur neutre (NULL), lire les données mémorisées dans le secteur logique si le pointeur de chaîne (CHAIN_PTRⱼ) du secteur logique a une valeur neutre (NULL) ou lire les données mémorisées dans un autre secteur logique directement ou indirectement adressée par le pointeur de chaîne (CHAIN_PTRⱼ) ;
si le pointeur de remappage (REMAP_PTRⱼ) pointe vers un pointeur de chaîne (CHAIN_PTR_{n≠j}) d'un certain secteur logique (n≠j), lire les données mémorisées dans le certain secteur logique (n≠j) si le pointeur de chaîne respectif (CHAIN_PTR_{n≠j}) a une valeur neutre (NULL) ou lire les données mémorisées dans un secteur logique différent directement ou indirectement adressé par le pointeur de chaîne (CHAIN_PTR_{n≠j}) ;
écrire les données dans un quelconque secteur logique selon la procédure suivante :
a) si l'indicateur d'état respectif (STATUSⱼ) du secteur logique a la première valeur (FREE), écrire l'ensemble de données dans l'espace de mémorisation respectif du secteur logique et affecter l'indicateur d'état (STATUSⱼ) de l'une des deuxième (OD) ou troisième (NOD) valeur ;
b) si l'indicateur d'état (STATUSⱼ) a la deuxième valeur (OD), répéter l'étape a) sur un autre secteur logique vide (n≠j), en initialisant l'indicateur d'état (STATUS_{n≠j}) respectif de l'autre secteur logique (n≠j) à la troisième valeur (NOD) et en initialisant le pointeur de chaîne (CHAIN_PTRᵢ) du secteur logique (i) directement ou indirectement adressé par le pointeur de chaîne (CHAIN_PTRⱼ) du secteur logique (j) à l'adresse de l'autre secteur logique (n≠j) ;
c) si l'indicateur d'état (STATUSⱼ) a la troisième valeur (OND) ou la quatrième valeur (DEL) et si le pointeur de remappage (REMAP_PTRⱼ) respectif du secteur logique (j) a une valeur neutre (NULL), répéter l'étape a) sur un autre secteur logique vide (n≠j), en initialisant l'indicateur d'état (STATUS_{n≠j}) respectif à la troisième valeur (NOD) et en initialisant le pointeur de remappage (REMAP_PTRⱼ) à l'adresse dudit autre secteur logique (n≠j) ;
d) si le pointeur de remappage (REMAP_PTRⱼ) n'est pas neutre (NULL), répéter l'étape a) sur un autre secteur logique vide (n≠j), en intialisant l'indicateur d'état (STATUS_{n≠j}) respectif à la troisième valeur (NOD), et en initialisant un pointeur de chaîne (CHAIN_PTRⱼ) respectif d'un autre secteur logique directement ou indirectement adressé par le pointeur de remappage (REMAP_PTRⱼ) à l'adresse de l'autre secteur logique (n≠j) ;
réécrire les données mémorisées dans un quelconque secteur physique selon la procédure suivante :
sauvegarder les données valides contenues dans les secteurs logiques dont les pointeurs de chaîne respectifs (CHAIN_PTR) ont la valeur neutre (NULL) et dont l'indicateur d'état (STATUS) respectif diffère de la quatrième valeur (DEL) ;
pour toute donnée valide, sauvegarder l'adresse du secteur logique respectif ;
effacer physiquement le secteur physique de la mémoire ;
écrire les données sauvegardées dans les secteurs logiques respectifs et mettre les indicateurs d'état (STATUS) respectifs à la deuxième valeur (OD).
